(19) Europäisches Patentamt
European Patent Office
Office européen des brevets

(11) **EP 1 870 950 B1**

(12) **EUROPEAN PATENT SPECIFICATION**

(45) Date of publication and mention
of the grant of the patent:
**17.08.2011 Bulletin 2011/33**

(51) Int Cl.:
***H01M 4/86*** *(2006.01)*    ***C04B 35/00*** *(2006.01)*
***H01M 8/12*** *(2006.01)*    ***H01M 4/90*** *(2006.01)*

(21) Application number: **06729691.3**

(22) Date of filing: **22.03.2006**

(86) International application number:
**PCT/JP2006/305724**

(87) International publication number:
**WO 2006/101136 (28.09.2006 Gazette 2006/39)**

(54) **FUEL ELECTRODE MATERIAL FOR SOLID OXIDE FUEL CELL, FUEL ELECTRODE USING SAME, FUEL-CELL CELL**

BRENNSTOFFELEKTRODENMATERIAL FÜR EINE FESTOXID-BRENNSTOFFZELLE, BRENNSTOFFELEKTRODE DAMIT, BRENNSTOFFZELLE

MATÉRIAU D ÉLECTRODE COMBUSTIBLE POUR PILE À COMBUSTIBLE D'OXYDE SOLIDE, ÉLECTRODE COMBUSTIBLE UTILISANT LEDIT MATÉRIAU, CELLULE À PILE À COMBUSTIBLE

(84) Designated Contracting States:
**CH DE LI**

(30) Priority: **23.03.2005 JP 2005084111**

(43) Date of publication of application:
**26.12.2007 Bulletin 2007/52**

(73) Proprietor: **Nippon Shokubai Co.,Ltd.
Osaka-shi, Osaka 541-0043 (JP)**

(72) Inventor: **HATA, Kazuo
50854 (JP)**

(74) Representative: **Müller-Boré & Partner
Patentanwälte
Grafinger Straße 2
81671 München (DE)**

(56) References cited:
**EP-A- 0 388 558      EP-A- 0 955 685
WO-A-2004/109827      JP-A- 9 180 734
JP-A- 08 306 361      JP-A- 10 003 930
JP-A- 10 021 929      JP-A- 11 040 169
JP-A- 2003 017 073      JP-A- 2004 071 360
JP-A- 2004 071 360      JP-A- 2004 327 278
JP-A- 2005 019 261      JP-A- 2005 019 261
US-A1- 2002 028 367**

**Description**

The present invention relates to a fuel electrode material for solid oxide fuel cell, a fuel electrode using the material, and a fuel cell; and more particularly to a material which enables to obtain a fuel electrode having good gas permeability, excellent in electrochemical reactivity, conductivity and durability, and giving such a fuel electrode for solid oxide fuel cell which does not suffer from damages or destruction due to thermal stress between itself and another component, a fuel electrode using the material, and a fuel cell using the fuel electrode.

Recently, a fuel cell has been drawing attention as a clean energy source, and investigations on improvement and practical application thereof mainly from domestic power generation to industrial power generation and further for automotive power generation have been rapidly carried out.

As an electrode material for solid oxide fuel cell, are used a porous cermet composed of conductive metal particles and ceramic particles, such as a nickel-zirconia cermet or the like. The reason why such a porous cermet is used is that damage and destruction of fuel cell due to an inner strain, induced by thermal stress generation due to difference of thermal expansion coefficient of metal particles to be a main conductive component from those of a solid electrolyte and other members, have to be prevented.

However, these kinds of materials have a problem that agglomeration and sintering of nickel particles having electron conductivity gradually proceed to deteriorate the electrochemical reactivity and conductivity, thereby the performance to generate electric power is deteriorated, in case where these kinds of materials are exposed at a high temperature of 800 to 1000°C, which is a general work temperature of solid oxide fuel cell. Various methods for solving the problem have been proposed.

For example, in Japanese Unexamined Patent Publication No. Hei 3-49156, a method of using ceramic particles whose surfaces are coated with nickel fine particles is disclosed. In Japanese Unexamined Patent Publication No. Hei 5-174833, a composite material composed of ceramic particles whose surfaces are coated with conductive metal-coated particles and oxygen ion conductive ceramic particles is disclosed. However, these techniques require advanced and complicated treatments for coating or covering ceramic particles with metals and the cost would be inevitably high.

Further, for example, in order to suppress output decrease due to carbon deposition caused in the case of using a fuel obtained by reforming lightweight hydrocarbons, it was proposed to use $Ni/CeO_2$ cermet containing metal nickel supported on ceria and cermet containing metal nickel supported on ceria-zirconia and ceria yttria stabilized zirconia in Japanese Unexamined Patent Publication No. Hei 4-121964 and nickel scandia stabilized zirconia cermet for improving high conductivity and low deterioration, i.e. durability, in Japanese Unexamined Patent Publication No. Hei 7-6768. However, even these improved techniques give electric power generation durability no longer than 200 hours and cannot be necessarily said to be sufficient to satisfy long term durability for practical uses.

Besides, also proposed are fuel electrode materials prepared by adding zirconia powders with an average particle size smaller than that of nickel oxide to fuel electrode material powders containing nickel oxide powder in Japanese Unexamined Patent Publication No. Hei 4-192261 and electrode material in which the average particle sizes of prepared particles satisfy the relation, "coarse zirconia particles > nickel oxide particles > fine zirconia particles" in Japanese Unexamined Patent Publication No. Hei 8-306361. However, even if these electrode materials are used, the cell voltage deterioration is no higher than 2.2% per 1000 hours by a power generation durability test and the result does not reach the satisfactory level in consideration of practical uses of fuel cell.

Further, as means for preventing very small crack formation in a fuel electrode due to volume shrinkage caused by reduction of nickel oxide to metal nickel during the power generation, a fuel electrode having a two layer structure is proposed in Japanese Unexamined Patent Publication No. Hei 9-92294. The two layer structure is composed of a first fuel electrode layer, formed on the surface of a solid electrolytie, containing nickel oxide particles in combination with zirconia particles and/or ceria particles and a second fuel electrode layer, formed on the surface of the first fuel electrode layer, containing nickel particles in combination with zirconia particles and/or ceria particles.

In addition, in Japanese Unexamined Patent Publication No.2001-102060, is disclosed a fuel electrode to satisfy three requirements, that is, the electrode property, electron conductivity and thermal expansion property at the time of use. The fuel electrode has a two layer structure of an electrode reactive layer neighboring to a solid electrolyte and an electron conductive layer neighboring to the reactive layer. The electrode reactive layer is composed of a mixture of fine Ni and fine oxygen ion conductor, both of which have an average particle size of 0.5 $\mu$m or less. The electron conductive layer is composed of a mixture of fine Ni and fine oxide powder, in which an average particle size ratio of nickel : oxide is adjusted to have in a range of 1 : 2 to 1 : 20, and an average particle size of the oxide is 1 $\mu$m or larger.

However, even the electrode materials disclosed in the above-mentioned Japanese Unexamined Patent Publication Nos. Hei 9-92294 and 2001-102060 fail to satisfy the long term durability, which is the most important problem for actual use of fuel cell, and moreover those materials have problems in terms of the productivity and cost, since extra steps are required for making those two layer structure.

EP 0 955 685 A1 describes a fuel electrode for solid electrolyte type fuel cell and a process for the preparation of the same.

The present invention has been accomplished to improve the above-mentioned various problems of the conventional techniques, and an object of the present invention is to provide a fuel electrode material for a solid oxide fuel cell having good gas permeability and excellent in electrochemical reactivity and conductivity and easy to be produced at a relatively economically by a simple method and to provide a fuel electrode with high capability using the fuel electrode material and a fuel cell.

A fuel electrode material for a fuel cell according to the present invention which solves the above-mentioned problems is characterized in comprising a mixture of a coarse ceria particle group, a fine zirconia particle group, and a nickel oxide particle group; wherein the coarse ceria particle group is a group of ceria particle doped with at least one element selected from yttrium, samarium, gadolinium; the fine zirconia particle group is a group of zirconia particle stabilized by yttria and/or scandia; and average particle sizes of the respective particle groups satisfy a following relation: the coarse ceria particle group > the nickel oxide particle group > the fine zirconia particle group.

While satisfying the above-mentioned relation of the average particle size, it is preferable for the above-mentioned respective particles in the present invention that the average particle size of the ceria particle group is 2 to 50 $\mu$m, the average particle size of the nickel oxide particle group is 0.5 to 5 $\mu$m, and the average particle size of the zirconia particle group is 0.1 to 1 $\mu$m; and contents of the respective particle groups in the fuel electrode material are 20 to 50% by mass for the ceria particle group, 40 to 70% by mass for the nickel oxide particle group, 5 to 25% by mass for the zirconia particle group, and a total content of the ceria particle group and the zirconia particle group is 30 to 60% by mass.

Further, a fuel electrode for solid oxide fuel cell of the present invention is a fuel electrode formed on one face side of a solid electrolyte in a solid oxide fuel cell, and is characterized in that being made of the fuel electrode material for solid oxide fuel cell satisfying the above-specified factors. A solid oxide fuel cell comprising a fuel electrode made of the above-mentioned fuel electrode material and formed on one face side of a solid electrolyte, and an air electrode formed on the other face is also within an technical scope of the present invention.

As described above, in the present invention, a mixture containing a coarse ceria particle doped at least one element selected from yttrium, samarium, gadolinium, a nickel oxide particle and a fine zirconia particle stabilized with yttria and/or scandia is used as the configuration materials of the fuel electrode for fuel cell; and the relation of the average particle sizes of these particles is specified; and the nickel oxide particle is dispersed in the coarse ceria particle to form conductive paths of electricity and ions. Moreover, the above-mentioned relation of the average particle sizes is specified, so that the contact point among the three kinds of the particles is increased and consequently, the coarse ceria particle is firmly bonded.

As a result, the fuel electrode produced from an homogenous mixture of the above-mentioned three types of particles exhibits excellent electrochemical property. At the same time, a structure skeleton is formed with the hardly sintering coarse ceria particle and the fine zirconia particle. Such a structure increases the structure strength of the fuel electrode and accordingly sintering which tends to be caused in the case of exposure to a high temperature for a long duration can be suppressed and proper porosity is maintained to keep the excellent electrochemical property for a long duration, due to formation of such a firm structure skeleton. Further, sintering and bonding is caused due to existence of the fine zirconia particle among the coarse ceria particle, so that the coarse ceria particle skeleton can be reinforced, and consequently the pore required in the anode side is not clogged and excellent gas permeability can be maintained for a long duration.

To efficiently exhibit such properties, it is important for the average particle sizes of the above-mentioned respective particles to satisfy the relation: the coarse ceria particle > the nickel oxide particle > the fine zirconia particles, and more preferably, the average particle sizes of the respective particles are in the ranges of coarse ceria particles: 2 to 50 $\mu$m; nickel oxide particles: 0.5 to 5 $\mu$m; and fine zirconia particles: 0.1 to 10 $\mu$m while satisfying the above-mentioned relation.

At first, as the coarse ceria particle, those having an average particle size in a range of 2 $\mu$m or larger and 50 $\mu$m or smaller are preferable to be used. In this connection, in case that the average particle size of the coarse ceria particle is smaller than 2 $\mu$m, the role as the coarse particle is deteriorated and the skeleton formation as a fuel electrode material becomes insufficient. As a result, not only it becomes difficult to form proper gaps among particles and to obtain a satisfactory aeration property but also it becomes easy to promote sintering under a high temperature use condition and the porosity of the fuel electrode is considerably lowered. On the other hand, in case that the average particle size of the ceria particle becomes so large as to exceed 50 $\mu$m, though the gaps among the particles are sufficiently maintained and decrease of the porosity due to promotion of the sintering is sufficiently suppressed, the fuel electrode itself lacks the strength and defection of the particles tends to be caused. Moreover, a large amount of the fine zirconia particle as a bonding agent have to be added to form a firm skeleton and addition amount of the nickel oxide particle for forming conductive paths in the fuel electrode tends to be relatively insufficient to result in an undesirable consequence in the conductivity. In consideration of the above-mentioned matter, the average particle size of the coarse ceria particle is preferably 3 $\mu$m or larger and 40 $\mu$m or smaller, and more preferably 3 $\mu$m or larger and 30 $\mu$m or smaller.

In the present invention, in addition of the above-mentioned average particle size of the coarse ceria particle, to make the fuel electrode layer homogenous with a suppressed contamination amount of extremely coarse particle as much as possible, 90% by volume diameter is preferably 5 $\mu$m or larger and 80 $\mu$m or smaller, more preferably 7 $\mu$m or larger and 70 $\mu$m or smaller, and even more preferably 9 $\mu$m or larger and 50 $\mu$m or smaller.

Further, the coarse ceria particle with a specific surface area in a range from 0.5 to 30 $m^2$/g is preferably used. It is because if the specific surface area is lower than 0.5 $m^2$/g, the particle is very hard and stripe-like pattern tends to be formed at the time of printing. On the contrary, if the specific surface area becomes too large exceeding 30 $m^2$/g, the specific surface area is considerably decreased at the time of baking after printing a fuel electrode paste and the ceria particle is considerably shrunk to easily cause cracking in the fuel electrode and it results in a risk of strength decrease.

As the coarse ceria particle, may be used a cerium oxide particle alone and a ceria particle mixed with a proper amount of alumina or zirconia; a ceria particle doped with at least one element selected from yttrium, samarium, gadolinium and thus provided with mixed conductivity is used preferably in the present invention. The doping amount is not particularly limited, however preferably in a range from 5 to 40% by atom and more preferably from 10 to 30% by atom to cerium.

The nickel oxide particle is converted into a metal nickel particle forming the conductive paths while being exposed to the fuel gas such as hydrogen and reduced at the time of working of fuel cell. In this case, since about 10 to 20% shrinkage on the basis of the particle size occurs, it is preferable to adjust the average particle size in a range from 0.5 to 5 $\mu$m, based on the relation with the fine zirconia particle to be used in combination and in consideration of such conversion into a nickel particle.

In this connection, in case that the average particle size of the nickel oxide particle is smaller than 0.5 $\mu$m, although the contact to the coarse ceria particle becomes firm and the strength as the skeleton can be increased, sintering tends to be promoted easily in the case of exposure for a long duration at a high temperature and the conductive paths are disconnected to probably result in a problem of the conductivity. On the other hand, in case that the average particle size of the nickel oxide particle exceeds 5 $\mu$m, the contact points with the coarse ceria particle are lessened to make it difficult to obtain sufficient conductivity. In consideration of the above-mentioned matter, the average particle size of the nickel oxide particle is preferably 0.7 $\mu$m or larger and 4 $\mu$m or smaller, more preferably 0.7 $\mu$m or larger and 3 $\mu$m or smaller.

With respect to the nickel oxide particle, too, similarly to the above-mentioned case of the coarse ceria particle, to make the fuel electrode layer homogenous with a suppressed mixing amount of extremely coarse particle as much as possible, the 90% by volume diameter is preferably 0.8 $\mu$m or larger and 10 $\mu$m or smaller, more preferably 1 $\mu$m or larger and 5 $\mu$m or smaller, and even more preferably 2 $\mu$m or larger and 8 $\mu$m or smaller.

The specific surface area of nickel oxide is preferably in a range from 0.5 to 10 $m^2$/g. It is because in case that the specific surface area is lower than 0.5 $m^2$/g, the electrode activity is considerably decreased, and if the specific surface area exceeds 10 $m^2$/g, the activity decrease with the elapse of time becomes significant although the initial electrode activity is high and the deterioration ratio of the power density also becomes significant.

The fine zirconia particle works as an adhesive for bonding the above-mentioned coarse ceria particles and forming the skeleton, and the average particle size thereof is preferably to be adjusted in a range from 0.1 to 1 $\mu$m.

In this connection, in case that the average particle size of the fine zirconia particle is smaller than 0.1 $\mu$m, a large quantity of fine zirconia particle is needed to bond the above-mentioned coarse ceria particles for forming a firm skeleton, and it therefore becomes difficult to retain the necessary amount of nickel oxide for forming conductive paths in the fuel electrode layer and may probably result in a trouble of conductivity. On the other hand, in case that the average particle size of the fine zirconia particle exceeds 1 $\mu$m, the contact points with the coarse ceria particle are lessened to make it difficult to obtain sufficient conductivity. In consideration of the above-mentioned matter, the average particle size of the fine zirconia particle is preferably 0.2 $\mu$m or larger and 0.8 $\mu$m or smaller, more preferably 0.2 $\mu$m or larger and 0.6 $\mu$m or smaller.

The specific surface area of zirconia particle is preferably in a range from 2 to 30 $m^2$/g. It is because in case that the specific surface area is lower than 2 $m^2$/g, it becomes difficult to form the skeleton, and if the specific surface area exceeds 30 $m^2$/g, although the skeleton formability is improved, the specific surface area is decreased with the elapse of time and cracking tends to occur easily on the fuel electrode to result in decrease of the strength.

The average particle size (50% by volume diameter) of the respective particles in the present invention is a measurement value measured by using a laser diffraction type particle size distribution measurement apparatus "LA-920" manufactured by Horiba Ltd.; preparing an aqueous solution by adding 0.2% by mass of sodium metaphosphate in distilled water as a dispersion medium; adding 0.01 to 0.5% by mass of each particle in about 100 $cm^3$ of the dispersion medium; and dispersing the particle therein by 3 minutes ultrasonic treatment. Further, the 90% by volume diameter means the particle size at the point of 90% by volume in the particle size distribution of each sample particle measured in the same manner.

With respect to the fine zirconia particle, too, similarly to the above-mentioned case of coarse ceria particle, to reliably form the skeleton by bonding the coarse ceria particle with a suppressed mixing amount of relatively coarse particle to the utmost low level, the 90% by volume diameter is preferably 0.5 $\mu$m or larger and 5 $\mu$m or smaller, more preferably 0.8 $\mu$m or larger and 3 $\mu$m or smaller, and even more preferably 0.8 $\mu$m or larger and 2 $\mu$m or smaller.

The above-mentioned fine zirconia particle is composed of zirconia stabilized with yttria and/or scandia as described in the above, and tetragonal zirconia more excellent in the toughness and strength is more preferable rather than cubic zirconia to efficiently exhibit the function as a bonding material for skeleton formation by the coarse ceria particle. Partially stabilized zirconia containing mainly tetragonal system stabilized with 3 to 6% by mole of yttria in the case of the yttria stabilized zirconia and stabilized with 3 to 7% by mole of scandia in the case of the scandia stabilized is particularly preferable.

The contents of the respective particles are preferably in ranges of 20 to 50% by mass of the coarse ceria particle, 40 to 70% by mass of the nickel oxide particle and 5 to 25% by mass of the fine zirconia particle; and more preferably in ranges of 25 to 45% by mass of the coarse ceria particle, 45 to 65% by mass of the nickel oxide particle, and 5 to 20% by mass of the fine zirconia particle.

In case of the content of the coarse ceria particle is lower than 20% by mass, the skeleton formation becomes insufficient and not only the gas permeability is decreased but also the porosity decrease becomes significant at the time of use. On the contrary, if the content of the coarse ceria particle exceeds 50% by mass, the skeleton strength is lowered. In case of the content of the nickel oxide particle is lower than 40% by mass, the conductive path formation becomes insufficient to result in inferior conductivity. On the contrary, if the content of the nickel oxide particle exceeds 70% by mass, sintering among nickel particles tends to occur easily and the conductive paths are disconnected and the conductivity tends to be insufficient. In case of the content of the fine zirconia particle is lower than 5% by mass, the skeleton formation becomes difficult due to insufficiency of the bonding material and the gas permeability is deteriorated. If the content of the fine zirconia particle exceeds 25% by mass, although the skeleton strength is increased, sintering proceeds at a high temperature at the time of operation and the porosity tends to be changed with the elapse of time.

In the case of producing a fuel electrode using the fuel electrode material containing the above-mentioned three types of respective particles, the respective raw material powders are weighed to adjust the coarse ceria particle in a range of 20 to 50% by mass, the nickel oxide particle in a range of 40 to 70% by mass and the fine zirconia particle in a range of 5 to 25% by mass, and are homogenously mixed by a mill or the like. A particularly preferable method is a method of mixing at first prescribed amounts of the coarse ceria particle and the nickel oxide particle to adhere the nickel oxide particle to the surface of the coarse ceria particle, and then adding and mixing a prescribed amount of the fine zirconia particle with the resulting mixture.

A type of a mixing apparatus to be used in this case is not particularly limited and the mixing apparatus which the inventors of the present invention used is a multi-purpose mixer manufactured by Mitsui Mining Co., Ltd. It was confirmed that the three kinds of the particles can be thoroughly and homogenously mixed in the case of a method of at first mixing the coarse ceria particle and the nickel oxide particle by rotating rotary blades at a high speed in a compound treatment tank of the mixer, adding the fine zirconia powder and successively mixing the mixture by rotating the rotary blades of the apparatus at a low rotation speed.

A paste for the fuel electrode can be obtained by mixing the mixed powder material obtained in the above-mentioned manner with a binder such as ethyl cellulose, polyethylene glycol, polyvinyl butyral resin; a solvent such as ethanol, toluene, $\alpha$-terpineol, carbitol; a plasticizer such as glycerin, glycol, dibutyl phthalate; and further a dispersant, a defoaming agent, or a surfactant using, for example, a three rolls mill apparatus or a planetary mill, and' properly adjusting a viscosity of the mixture.

A kind of binder is not particularly limited as long as it is easy to be thermally decomposed and dissolved in a solvent and has fluidity suitable for printing and coating, and may be selected properly from conventionally known organic binders. Examples of the organic binders are ethylene type copolymers, styrene type copolymers, acrylate type and methacrylate type copolymers, vinyl acetate type copolymers, maleic acid type copolymers, vinyl butyral type resins, vinyl acetal type resins, vinyl formal type resins, vinyl alcohol type resins, and celluloses such as ethyl cellulose.

Among them, in terms of the film formability of the fuel electrode layer and the thermal decomposability at the time of baking, are recommended as preferable examples (meth)acrylate type copolymers having a number average molecular weight of 20,000 to 200,000 and more preferably 50,000 to 150,000, obtained by polymerization or copolymerization of at least one kind of monomer selected from carboxyl group-containing monomers, such as alkyl acrylates having an alkyl group of 10 or less carbon atoms such as methyl acrylate, ethyl acrylate, propyl acrylate, butyl acrylate, isobutyl acrylate, cyclohexyl acrylate, 2-ethylhexyl acrylate; alkyl methacrylates having an alkyl group of 20 or less carbon atoms such as methyl methacrylate, ethyl methacrylate, butyl methacrylate, isobutyl methacrylate, octyl methacrylate, 2-ethylhexyl methacrylate, decyl methacrylate, dodecyl methacrylate, lauryl methacrylate, cyclohexyl methacrylate; hydroxyalkyl acrylates and hydroxyalkyl methacrylates having a hydroxyalkyl group such as hydroxyethyl acrylate, hydroxypropyl acrylate, hydroxyethyl methacrylate, hydroxypropyl methacrylate; aminoalkyl acrylates and aminoalkyl methacrylates such as dimethylaminoethyl acrylate, dimethylaminoethyl methacrylate; acrylic acid, methacrylic acid, maleic acid, maleic acid half esters such as monoisopropyl maleate.

As the solvent, those having low volatility at normal temperature are preferable to suppress viscosity alteration during the printing for the solvent, and high boiling point solvents such as terpineol, dibutylcarbitol, butylcarbitol acetate, 2,2,4-trimethyl-1,3-pentanediol monoisobutylate, 2,2,4-trimethyl-1,3-pentanediol diisobutylate, oleyl alcohol may be used alone or in form of a mixture of two or more of them, or by being mixed with a low boiling point solvents such as acetone, methyl ethyl ketone, methanol, ethanol, isopropanol, butanols, denatured alcohols, ethyl acetate, toluene, xylene or the like.

As the dispersant, to carry out dispersion of the oxide powders well, may be used polyhydric alcohol esters such as glycerin, sorbitan; polyether (polyol) type; amine type; polymer electrolytic substances such as polyacrylic acid, polyammonium acrylate; organic acids such as citric acid, tartaric acid; copolymer of isobutylene or styrene with maleic anhydride, and its ammonium salts and amine salts; and copolymer of butadiene and maleic anhydride, and its ammonium salts, and particularly sorbitantriol is preferable. As the plasticizer, derivatives of polyethylene glycol and phthalic acid esters are preferable, and dibutyl phthalate and dioctyl phthalate are particularly preferable.

The fuel electrode paste is prepared by kneading the above-mentioned oxide powders with the solvent and the binder by a ball mill or the like in a conventionally known method. At that time, the bonding assisting agent, a defoaming agent, a leveling improver, and a rheology adjustment agent may be added, based on the necessity.

The leveling improver has a function of mainly suppressing an unevenness of the fuel electrode surface and exerts the effect same as so-called lubricant. For example, hydrocarbon type polyethylene waxes, urethane-modified polyethers, alcohol type polyglycerol, polyhydric alcohols, fatty acid type higher fatty acids, and oxyacids can be exemplified, and fatty acid type ones such as stearic acid and hydroxystearic acid are particularly preferable.

The binder and the solvent are added to the above-mentioned oxide powders, and kneaded and mixed homogenously by an attriter, a ball mill, a three rolls mill apparatus, or the like to obtain a paste. In a case that the fuel electrode is formed by coating or dipping, it is preferable to adjust the viscosity in a range of 1 to 100 mPa·s, more preferably in a range of 2 to 50 mPa·s measured by a B type viscometer. In the case of forming the fuel electrode by screen printing, the slurry viscosity is preferably in a range from 50,000 to 2,000,000 mPa·s, more preferably in a range from 80,000 to 1,000,000 mPa·s, and even more preferably in a range from 100,000 to 500,000 mPa·s measured by a Brookfield viscometer.

After the viscosity adjustment, coating is carried out on a solid electrolyte by, for example, a bar coater, a spin coater, a dipping apparatus, or film formation in a thin film-like state is carried out by a screen printing method, and then heating and drying are carried out at a constant temperature, for example, at 50°C, 80°C, or 120°C or by successively and continuously increasing the temperature in a temperature range from 40°C to 150°C to form the fuel electrode layer.

A thickness of the fuel electrode is properly in a range from about 10 to 300 $\mu$m, and preferably in a range from 15 to 100 $\mu$m, and particularly preferably in a range from 20 to 50 $\mu$m.

As the solid electrolyte material for solid oxide type fuel cell according to the present invention, may be exemplified zirconia-based ceramics containing zirconia and one or more kinds of alkaline earth metal oxides such as MgO, CaO, SrO, BaO, rare earth metal oxides such as $Y_2O_3$, $La_2O_3$, $CeO_2$, $Pr_2O_3$, $Nd_2O_3$, $Sm_2O_3$, $Eu_2O_3$, $Gd_2O_3$, $Tb_2O_3$, $Dy_2O_3$, $Ho_2O_3$, $Er_2O_3$, $Yb_2O_3$, furthermore $Sc_2O_3$, $Bi_2O_3$, $In_2O_3$; ceria-based or bismuth-based ceramics containing $CeO_2$ or $Bi_2O_3$ added by one or more kinds of alkaline earth metal oxides such as MgO, CaO, SrO, BaO, rare earth metal oxides such as $Y_2O_3$, $La_2O_3$, $CeO_2$, $Pr_2O_3$, $Nd_2O_3$, $Sm_2O_3$, $Eu_2O_3$, $Gd_2O_3$, $Tb_2O_3$, $Dy_2O_3$, $Ho_2O_3$, $Er_2O_3$, $Yb_2O_3$ as well as $Sc_2O_3$, $In_2O_3$, PbO, $WO_3$, $MoO_3$, $V_2O_5$, $Nb_2O_5$; further $AZrO_3$ (A: an alkaline earth element such as Sr) having a perovskite structure and doped with In and Ga; gallate type ceramics containing $LaGaO_3$ doped with or reinforced by dispersion of alkaline earth metal oxides such as MgO, CaO, SrO, BaO, rare earth metal oxides such as $Y_2O_3$, $CeO_2$, $Pr_2O_3$, $Nd_2O_3$, $Sm_2O_3$, $Eu_2O_3$, $Gd_2O_3$, $Tb_2O_3$, $Dy_2O_3$, $Ho_2O_3$, $Er_2O_3$, $Yb_2O_3$, furthermore transition metal oxides such as $Sc_2O_3$, $TiO_2$, $V_2O_5$, $Cr_2O_3$, $Mn_2O_3$, $Fe_2O_3$, $Co_3O_4$, NiO, CuO, ZnO, $Nb_2O_5$, $WO_3$, typical metal oxides such as $Al_2O_3$, $SiO_2$, $In_2O_3$, $Sb_2O_3$, $Bi_2O_3$; and indium-based ceramics such as $Ba_2In_2O_5$ having brown millerite structure. These ceramics may further contain $SiO_2$, $Al_2O_3$, $GeO_2$, $SnO_2$, $Sb_2O_3$, PbO, $Ta_2O_5$, $Nb_2O_5$, or the like as another oxide.

Particularly preferable materials among them are solid electrolytes containing zirconia oxides stabilized with one or more elements of Y, Ce, Sm, Pr, Yb, Sc, and also those obtained by adding 0.05 to 5% by mass of at least one oxide selected from a group consisting of alumina, titania, silica, and ceria to these solid electrolytes are also recommended as preferable ones.

Especially preferable substances among them are zirconia type solid electrolytes stabilized with 3 to 10% by mole of yttria, i.e. YSZ, or zirconia type solid electrolytes stabilized with 4 to 12% by mole of scandia, i.e. ScSZ, and also zirconia type solid electrolytes obtained by further adding about 0.1 to 2% by mass of alumina or titania to these solid electrolytes. A shape of the electrolyte may be a flat type, waveform type, corrugated type, honeycomb type, cylindrical, or cylindrical and flat shape. A thickness of the electrolyte is preferably 5 to 500 $\mu$m, more preferably 10 to 300 $\mu$m, and even more preferably 20 to 200 $\mu$m.

At the time of producing the solid oxide fuel cell using the paste for a fuel electrode, screen printing or coating of the paste or slurry obtained by homogenously kneading the above-mentioned powder mixture of the fuel electrode material together with the binder, the solvent, the plasticizer, the dispersant and the like is carried out on one face side of the above-mentioned electrolyte to form a film, and the film is baked at a temperature of 1000 to 1400°C, preferably 1150 to 1350°C to form a fuel electrode. Next, the paste for an air electrode having a composition such as $La_{0.6}Sr_{0.4}Co_{0.2}Fe_{0.8}O_3$ containing compounded oxides of La, Sr, Co, Fe is prepared, and the paste is applied to the opposed face side of the above-mentioned electrolyte by screen printing to form a film, and the film is baked at a temperature of 900 to 1200°C, preferably 1000 to 1150°C to obtain a solid electrolytic fuel cell with a three-layered film structure.

In the present invention, as the air electrode material are preferably used perovskite type compounded oxides or mixtures of perovskite type oxides and solid electrolyte oxides. Examples of the above-mentioned perovskite type oxides are practically perovskite type transition metal oxides such as $La_{1-x}Sr_xCo_{1-y}Fe_yO_3$ ($0.2 \leq x \leq 0.6$ and $0.6 \leq y \leq 0.9$), $Pr_{1-x}Sr_xMnO_3$ ($0.2 \leq x \leq 0.6$), and $La_{1-x}Sr_xMnO_3$ ($0.2 \leq x \leq 0.6$) and they can be used alone or two or more of them may be used in arbitrary combination.

In the above description, the atomic ratio of oxygen in the composition formulas of the perovskite type oxides is described as 3. As being made apparent for persons skilled in the art, since oxygen vacancy is formed in case that the atomic ratio x (y) is not 0, practically the atomic ratio of oxygen is often smaller than 3. However, since the number of oxygen vacancies is changed depending on the type of elements to be added and also on the production conditions, the atomic ratio of oxygen is described as 3 for convenience.

Practical examples of the solid electrolyte oxides in the case of the mixtures of the perovskite type oxides and solid electrolyte oxides are preferably exemplified by YSZ containing 8 to 10% by mole and preferably 8 to 9% by mole of $Y_2O_3$; ScSZ containing 9 to' 12% by mole and preferably 10 to 11% by mole of $Sc_2O_3$; and a doped ceria containing 10 to 35% by mole, preferably 15 to 30% by mole, and more preferably 20 to 30% by mole of at least one oxide selected from $Gd_2O_3$, $Y_2O_3$, and $Sm_2O_3$ (hereinafter a doped ceria containing $Gd_2O_3$ is referred to as "GDC"; a doped ceria containing $Y_2O_3$ is referred to as "YDC"; and a doped ceria containing is $Sm_2O_3$ referred to as "SDC"), and they may be used alone and also two or more of them may be used in arbitrary combination.

Using these air electrode materials, a paste for an air electrode is prepared in the same manner as the production of the above-mentioned paste for the fuel electrode.

Since solid state reaction may be caused when the solid electrolyte material and the fuel electrode material are exposed at a high temperature for a long time and an insulating substance may be produced in their interface, an interlayer is preferable to be further formed between the solid electrolyte layer and the fuel electrode layer. As materials for the interlayer, the above-mentioned GDC, YDC, SDC, which have oxygen ion conductivity and electron conductivity and hardly cause the solid state reaction with the solid electrolyte material and the fuel electrode material, are preferably usable. A paste for the interlayer is also produced in the same manner using these materials and the interlayer film may be formed on the electrolyte face on the reverse side to the fuel electrode film formation side.

In this case, since the air electrode is to be formed on the interlayer film, a four-layered film cell is produced.

In the present invention, the materials and the film formation methods for composing the solid electrolyte film, the interlayer, and the air electrode are not limited at all and the above descriptions are only some examples.

In the above description, a case of producing a self-supported flat type solid electrolyte fuel cell is simply illustrated, however the fuel electrode material of the present invention can be similarly applicable for production of a cylindrical solid electrolyte fuel cell. Further, it is also possible to produce a fuel cell by applying the above-mentioned fuel electrode material of the present invention to an electrode supporting type solid electrolyte fuel cell comprising the fuel electrode, the solid electrolyte, and the air electrode on the surface of a porous supporting tube or supporting plate.

EXAMPLES

Hereinafter, the present invention will be described more in detail with reference to Examples and Comparative Examples; however it is not intended that the present invention be limited to the following Examples, and modifications and substitutions to the Examples can be made without departing from the intent of the anteroposterior description. Such modifications and substitutions are included in the technical scope of the present invention.

Examples

Fuel electrode materials containing nickel oxide particles, coarse ceria particles and fine zirconia particles described in the following Tables 1 and 2 were made to be pastes. The each paste was applied to one face of 4ScSZ electrolyte film (thickness: 150 $\mu$m x diameter: 30 mm) consisting of zirconia stabilized with 4% by mole of scandia by screen printing to form a fuel electrode.

The nickel oxide particle and the coarse ceria particle were mixed at a prescribed ratio in a total amount of 300 g in a compounding treatment tank of a multi-purpose mixer (manufactured by Mitsui Mining Co., Ltd.), and treated at a high speed of 7,000 rpm for 1 minute to obtain mixed particles of the coarse ceria particle and the nickel oxide particle. Next, the fine zirconia particle in a prescribed ratio were added thereto and treated at 1,000 rpm for 1 minute to obtain the fuel electrode material.

The fuel electrode paste was produced by adding 2 g of ethyl cellulose as a binder, 38 g of terpineol as a solvent and 0.5 g of sorbitan acid ester (trade name: IONET S-80, manufactured by Sanyo Chemical Industries, Ltd.) as a dispersant to 50 g of the above-mentioned fuel electrode material and milling the mixture five times by a three roll mill apparatus. The screen printing was carried out using a printing plate made of a SUS net with 200 meshes, and application and drying were carried out to form a fuel electrode film with a prescribed thickness.

Then, a paste consisting of 20% by mole of samarium-doped ceria (specific surface area: 5.8 m$^2$/g, 50% by volume diameter: 0.8 $\mu$m, 90% by volume diameter: 2.2 $\mu$m, manufactured by Seimi Chemical Co., Ltd.) for an interlayer was produced, and applied on the face in the reverse side in a film thickness of 8 $\mu$m by screen printing using a printing plate made of a SUS net with 200 meshes. The electrolytes applied the fuel electrode film on one face and the interlayer on the reverse face side was baked at 1150°C for 3 hours to form the fuel electrode with a thickness about 30 to 60 $\mu$m and the interlayer with a thickness about 6 $\mu$m.

Further, air electrode material consisting of 80% by mass of a $La_{0.6}Sr_{0.4}CO_{0.2}Fe_{0.8}O_3$ powder (50% by volume diameter: 1.7 $\mu$m, 90% by volume diameter: 4.1 $\mu$m, manufactured by Seimi Chemical Co., Ltd.) and 20% by mass of 10YSZ powder manufactured by Tosoh Corporation was made into a paste. The paste was applied on the formed interlayer by screen printing to form an air electrode.

The air electrode was also formed by producing the air electrode paste in the same manner as the above-mentioned fuel electrode paste and applying the paste using a printing plate made of a SUS net for screen printing, and the paste was baked at 1000°C for 3 hours to form the air electrode with a thickness of about 30 $\mu$m. Thus, a four-layer structure fuel cell with a diameter of 30 mm was obtained.

By using the cell and a small type single cell power generation testing apparatus, a power generation test was carried out at 800°C to measure the highest power density. Moisturized hydrogen containing 3% steam at a room temperature was used as a fuel gas, and air was used as a oxidizing agent. Trade name "R8240" manufactured by Advantest Corporation was used as a current measurement apparatus, and trade name "R6240" manufactured by Advantest Corporation was used as a current voltage generator.

To confirm a deterioration tendency of the power density by continuous power generation, a cell voltage at the time of fuel utilization ratio of about 30% was measured while electric current of 300 mA/cm$^2$ was applied, and a deterioration ratio was measured after 200 hours, 500 hours and 1000 hours from the starting. Further, SEM images of fuel electrode cross-sectional views were photographed after 500 hours and 1000 hours from the starting to investigate an alteration of a pore diameter of the fuel electrodes. The power density deterioration ratio and the porosity decrease ratio were measured according to the following.

$$[\text{Power density deterioration ratio}] = [(\text{Cell voltage at the starting} - \text{Cell voltage after prescribed time passed}) / \text{Cell voltage at the starting}] \times 100\ (\%)$$

[Porosity decrease ratio]

Portions of the fuel electrode in a cross-sectional view of the four-layer structure film cell were observed by a scanning electron microscope (trade name: JSM-5410 LV, manufactured by JEOL. Ltd.), and the portions corresponding to 120 x 90 $\mu$m selected at random at three points were photographed by SEM with 800 times magnification. The parts photographed to be black in the SEM photographs were regarded as pores and their surface areas were measured. The obtained surface areas were divided by (9.6 x 7.2 cm) and multiplied by 100, and the calculated numeral values were averaged to obtain the porosity.

$$[\text{Porosity decrease ratio}] = [(\text{Porosity at the starting} - \text{Porosity after prescribed time passed}) / \text{Porosity at the starting}] \times 100\ (\%)$$

The results are shown in Tables 1 and 2. The abbreviations in Tables 1 and 2 mean as follows:

"NiO-D": a nickel oxide powder manufactured by Seido Chemical Industry Co., Ltd.
"NiO": a nickel oxide powder manufactured by Seimi Chemical Co., Ltd.
"4ScSZ": 4% by mole scandia stabilized zirconia powder manufactured by Daiichi Kigenso Kagaku Kogyo Co., Ltd.
"6ScSZ": 6% by mole scandia stabilized zirconia powder manufactured by Daiichi Kigenso Kagaku Kogyo Co., Ltd.
"TZ-3Y-E": 3% by mole yttria stabilized zirconia powder manufactured by Tosoh Corporation

"TZ-4YS": 4% by mole yttria stabilized zirconia powder manufactured by Tosoh Corporation

"TZ-8YS": 8% by mole yttria stabilized zirconia powder manufactured by Tosoh Corporation

"SDC-30 coarse grade product": 30% by atom samarium doped ceria coarse particles manufactured by Daiichi Kigenso Kagaku Kogyo Co., Ltd.

"SDC-20 coarse grade product": 20% by atom samarium doped ceria coarse particles manufactured by Daiichi Kigenso Kagaku Kogyo Co., Ltd.

"SDC-20 0.3 $\mu$m": 20% by atom samarium doped ceria with 0.3 $\mu$m particle size manufactured by Seimi Chemical Co., Ltd.

"GDC-20 calcined product": calcined product of 20% by atom gadolinium doped ceria particles manufactured by Daiichi Kigenso Kagaku Kogyo Co., Ltd.

"YDC-20 calcined product": calcined product of 20% by atom yttrium doped ceria particles manufactured by Daiichi Kigenso Kagaku Kogyo Co., Ltd.

[Table 1]

| Experiment No. | 1 | 2 | 3 | 4 | 5 | 6 |
|---|---|---|---|---|---|---|
| Nickel oxide particle | "NiO-D" | "NiO-D" | "NiO-D" | "NiO-D" | "NiO" | "NiO" |
| Average particle size ($\mu$m) | 1,9 | 1,9 | 1,9 | 1,9 | 0,7 | 0,7 |
| 90% by volume diameter ($\mu$m) | 7,9 | 7,9 | 7,9 | 7,9 | 1,1 | 1,1 |
| Specific surface area ($m^2/g$) | 1.0 | 1.0 | 1.0 | 1.0 | 6,6 | 6,6 |
| Volume (%) | 55 | 60 | 65 | 70 | 50 | 45 |
| Fine zirconia particle Composition | "4ScSZ" 4%Sc stabilized zirconia | "6ScSZ" 6%Sc stabilized zirconia | "TZ-3Y-E" 3%Y stabilized zirconia | "TZ-4YS" 4%Y stabilized zirconia | "4ScSZ" 4%Sc stabilized zirconia | "TS-8YS" 8%Y stabilized zirconia |
| Average particle size ($\mu$m) | 0.50 | 0,34 | 0,2 | 0,2 | 0.50 | 0,2 |
| 90% by volume diameter ($\mu$m) | 1,2 | 1.0 | 0,9 | 1.0 | 1,2 | 1,3 |
| Specific surface area ($m^2/g$) | 8,6 | 5,5 | 16 | 7 | 8,6 | 7 |
| Volume (%) | 10 | 10 | 15 | 5 | 20 | 15 |
| Coarse ceria particle Composition | "SDC-30 coarse grade product" $Ce_{0.7}Sm_{0.3}O_x$ | "SDC-20 coarse grade product" $Ce_{0.8}Sm_{0.2}O_x$ | "GDC-20 calcined product" $Ce_{0.8}Gd_{0.2}O_x$ | "GDC-20 calcined product" $Ce_{0.8}Gd_{0.2}O_x$ | "YDC-20 calcined product" $Ce_{0.8}Y_{0.2}O_x$ | "SDC-30 coarse grade product" $Ce_{0.7}Sm_{0.3}O_x$ |
| Average particle size ($\mu$m) | 14,5 | 11,8 | 6,3 | 8,7 | 28,6 | 14,5 |
| 90% by volume diameter ($\mu$m) | 31,4 | 25,9 | 9,8 | 13,2 | 46,1 | 31,4 |
| Specific surface area ($m^2/g$) | 26,3 | 19,5 | 5,9 | 2,4 | 1,6 | 26,3 |
| Volume (%) | 35 | 30 | 25 | 25 | 30 | 40 |
| Anode layer thickness ($\mu$m) | 40 | 40 | 30 | 50 | 40 | 40 |
| Highest power density ($W/cm^2$) | 0,63 | 0,58 | 0.60 | 0,54 | 0,61 | 0,53 |

| Experiment No. | 1 | 2 | 3 | 4 | 5 | 6 |
|---|---|---|---|---|---|---|
| Power density deterioration ratio (%) | | | | | | |
| After 200 hours | 1,6 | 1,5 | 1,8 | 1.0 | 1,3 | 2.0 |
| After 500 hours | 1.9 | 1.8 | 2.0 | 1.4 | 1.7 | 2.5 |
| After 1000 hours | 2.3 | 2.2 | 2.5 | 2.7 | 2.1 | 3.2 |
| Porosity decrease ratio (%) | | | | | | |
| After 500 hours | 1.9 | 1.5 | 3.0 | 1.6 | 1.3 | 1.9 |
| After 1000 hours | 2.0 | 2.2 | 2.4 | 1.8 | 1.9 | 1.8 |

[Table 2]

| Experiment No. | 7 | 8 | 9 | 10 |
|---|---|---|---|---|
| Nickel oxide particle | "NiO-D" | "NiO-D" | "NiO-D" | "NiO-D" |
| Average particle size ($\mu$m) | 1,9 | 1,9 | 1,9 | 1,9 |
| 90% by volume diameter ($\mu$m) | 7,9 | 7,9 | 7,9 | 7,9 |
| Specific surface area ($m^2$/g) | 1.0 | 1.0 | 1.0 | 1.0 |
| Volume (%) | 55 | 45 | 65 | 70 |
| Fine zirconia particle | "4ScSZ calcined product" | "4ScSZ" | "TZ-3Y-E" | Without use |
| Composition | 4%Sc stabilized zirconia | 4%Sc stabilized zirconia | 3%Y stabilized zirconia | |
| Average particle size ($\mu$m) | 3.8 | 0.50 | 0,2 | |
| 90% by volume diameter ($\mu$m) | 9.3 | 1.2 | 0,9 | |
| Specific surface area ($m^2$/g) | 1.9 | 8.6 | 16 | |
| Volume (%) | 10 | 10 | 15 | |
| Coarse ceria particle | "SDC-30 coarse grade product" | "SDC-20 0.3$\mu$m" | Without use | "GDC-20 calcined product" |
| Composition | $Ce_{0.7}Sm_{0.3}O_x$ | $Ce_{0.8}Sm_{0.2}O_x$ | | $Ce_{0.8}Gd_{0.2}O_x$ |
| Average particle size ($\mu$m) | 14,5 | 0.30 | | 8,7 |
| 90% by volume diameter ($\mu$m) | 31,4 | 0.78 | | 13,2 |
| Specific surface area ($m^2$/g) | 26,3 | 6.6 | | 2,4 |
| volume (%) | 35 | 30 | | 30 |
| Anode layer thickness ($\mu$m) | 40 | 55 | 60 | 80 |
| Highest power density (W/$cm^2$) | 0.43 | 0.50 | 0.55 | 0,54 |
| Power density deterioration ratio (%) | | | | |
| After 200 hours | 5.1 | 2.6 | 0.9 | 1.0 |
| After 500 hours | 8.9 | 4.9 | 3.6 | 7.2 |
| After 1000 hours | 16.5 | 7.3 | 8.1 | 11.2 |
| Porosity decrease ratio (%) | | | | |
| After 500 hours | 1.7 | 7.3 | 10.3 | 1.3 |
| After 1000 hours | 2.6 | 15.1 | 13.7 | 1.9 |

The following can be contemplated from Tables 1 and 2.

Experiment Nos. 1 to 6 in Table 1 are all Examples within the scope of the present invention, and the particle size relation of the nickel oxide particle, the fine zirconia particle and the coarse ceria particle composing the fuel electrode satisfies the matters to specify the present invention. As a result, the power density and the porosity ratio are scarcely deteriorated with the elapse of time, and it is accordingly found that the electric power generation efficiency can be maintained sufficiently even in a long time operation.

On the contrary, in Experiment Nos. 7 and 8 in Table 2, although the nickel oxide particle, the fine zirconia particle and the coarse ceria particle are contained in the material for composing the fuel electrode, the particle size relation of them is out of the matters to specify the present invention, so that the deterioration ratio of either one or both of the power density and the porosity ratio is considerably significant and therefore they are hardly applicable for a long time operation. Further, in Experiment Nos. 9 and 10, since the fine zirconia particle or the coarse ceria particle is not added as the materials for composing the fuel electrode, the deterioration ratios of the power density and the porosity ratio are considerably significant and therefore they are hardly applicable for a long time operation.

According to the present invention, as described above, a fuel electrode material is composed of a mixture of a specified coarse ceria particle, a specified fine zirconia particle and a specified nickel oxide particle, and an average particle size relation of the respective particles and/or the content ratio of the respective particles is defined, so that it can be made possible to provide a material for a fuel electrode for solid oxide fuel cell having good gas permeability and excellent in electrochemical reactivity and conductivity and also excellent in durability of such characteristics and not suffering from damage or destruction due to thermal stress between itself and another component. Consequently, by using the material, it is made possible to provide a fuel electrode and further a fuel cell highly capable and excellent in durability.

## Claims

1. A nickel-zirconia-ceria fuel electrode material for solid oxide fuel cell,
   comprising a mixture of a coarse ceria particle group, a fine zirconia particle group, and a nickel oxide particle group;
   wherein the coarse ceria particle group is a group of ceria particle doped with at least one element selected from yttrium, samarium, gadolinium;
   the fine zirconia particle group is a group of zirconia particle stabilized by yttria and/or scandia; and
   average particle sizes of the respective particle groups satisfy a following relation: the coarse ceria particle group > the nickel oxide particle group > the fine zirconia particle group.

2. The fuel electrode material for solid oxide fuel cell according to claim 1, wherein the average particle size of the ceria particle group is 2 to 50 $\mu$m, the average particle size of the nickel oxide particle group is 0.5 to 5 $\mu$m, and the average particle size of the zirconia particle group is 0.1 to 1 $\mu$m.

3. The fuel electrode material for solid oxide fuel cell according to claim 1 or 2, wherein contents of the respective particle groups are 20 to 50% by mass for the ceria particle group, 40 to 70% by mass for the nickel oxide particle group, 5 to 25% by mass for the zirconia particle group, and a total content of the ceria particle group and the zirconia particle group is 30 to 60% by mass.

4. The fuel electrode material for valid oxide fuel cell according to any one of claims 1 to 3, wherein contents of the respective particle groups are 25 to 45% by mass for the cerin particle group, 45 to 65% by mass for the nickel oxide particle group, and 5 to 20% by mass for the zirconia particle group.

5. The fuel electrode material for solid oxide fuel cell according to any one of claims 1 to 4, wherein the zirconia particle is partially stabilized zirconia containing mainly tetragonal system stabilized with 3 to 6% by mole of yttvia in the case of the yttvia stabilized zirconia, and stabilized with 3 to 7% by mole of scandia in the case of the scandia stabilized zirconia.

6. A fuel electrode for solid oxide fuel cell formed on one face side of a solid electrolyte in a solid oxide fuel cell, wherein the fuel electrode is made of the fuel electrode material according to any one of claims 1 to 5.

7. A solid oxide fuel cell, comprising a fuel electrode formed on one face side of a solid electrolyte and an air electrode formed on the other face, wherein the fuel electrode is made of the fuel electrode material according to any one of claims 1 to 5.

## Patentansprüche

1. Nickel-Zirkoniumoxid-Ceroxid-Brennstoffelektrodenmaterial für eine Festoxidbrennstoffzelle,
   umfassend ein Gemisch aus einer groben Ceroxidteilchengruppe, einer feinen Zirkoniumoxidteilchengruppe und einer Nickeloxidteilchengruppe,

wobei die grobe Ceroxidteilchengruppe eine Gruppe von Ceroxidteilchen ist, die mit mindestens einem Element dotiert sind, das aus Yttrium, Samarium, Gadolinium ausgewählt ist,

die feine Zirkoniumoxidteilchengruppe eine Gruppe von Zirkoniumoxidteilchen ist, die durch Yttriumoxid und/oder Scandiumoxid stabilisiert sind, und

die durchschnittlichen Teilchengrößen der jeweiligen Teilchengruppen die folgende Beziehung erfüllen: grobe Ceroxidteilchengruppe > Nickeloxidteilchengruppe > feine Zirkoniumoxidteilchengruppe.

2. Brennstoffelektrodenmaterial für eine Festoxidbrennstoffzelle nach Anspruch 1, bei dem die durchschnittliche Teilchengröße der Ceroxidteilchengruppe 2 bis 50 $\mu$m beträgt, die durchschnittliche Teilchengröße der Nickeloxidteilchengruppe 0,5 bis 5 $\mu$m beträgt und die durchschnittliche Teilchengröße der Zirkoniumoxidteilchengruppe 0,1 bis 1 $\mu$m beträgt.

3. Brennstoffelektrodenmaterial für eine Festoxidbrennstoffzelle nach Anspruch 1 oder 2, bei dem der Gehalt der jeweiligen Teilchengruppen 20 bis 50 Massenprozent für die Ceroxidteilchengruppe, 40 bis 70 Massenprozent für die Nickeloxidteilchengruppe, 5 bis 25 Massenprozent für die Zirkoniumoxidteilchengruppe beträgt und der Gesamtgehalt der Ceroxidteilchengruppe und der Zirkoniumoxidteilchengruppe 30 bis 60 Massenprozent beträgt.

4. Brennstoffelektrodenmaterial für eine Festoxidbrennstoffzelle nach einem der Ansprüche 1 bis 3, bei dem der Gehalt der jeweiligen Teilchengruppen 25 bis 45 Massenprozent für die Ceroxidteilchengruppe, 45 bis 65 Massenprozent für die Nikkeloxidteilchengruppe und 5 bis 20 Massenprozent für die Zirkoniumoxidteilchengruppe beträgt.

5. Brennstoffelektrodenmaterial für eine Festoxidbrennstoffzelle nach einem der Ansprüche 1 bis 4, bei dem das Zirkoniumoxidteilchen teilweise stabilisiertes Zirkoniumoxid ist, das vorwiegend ein tetragonales System enthält, das in dem Fall des Yttriumoxid-stabilisierten Zirkoniumoxids mit 3 bis 6 Molprozent Yttriumoxid stabilisiert ist, und das in dem Fall des Scandiumoxid-stabilisierten Zirkoniumoxids mit 3 bis 7 Molprozent Scandiumoxid stabilisiert ist.

6. Brennstoffelektrode für eine Festoxidbrennstoffzelle, die auf einer Flächenseite eines Festelektrolyten in einer Festoxidbrennstoffzelle gebildet ist, wobei die Brennstoffelektrode aus dem Brennstoffelektrodenmaterial nach einem der Ansprüche 1 bis 5 hergestellt ist.

7. Festoxidbrennstoffzelle, umfassend eine Brennstoffelektrode, die auf einer Flächenseite eines Festelektrolyten gebildet ist, und eine Luftelektrode, die auf der anderen Fläche gebildet ist, wobei die Brennstoffelektrode aus dem Brennstoffelektrodenmaterial nach einem der Ansprüche 1 bis 5 hergestellt ist.

## Revendications

1. Un matériau d'électrode à combustible en nickel-zircone-oxyde de cérium pour des piles à combustible à oxyde solide,

comprenant un mélange d'un groupe de grosses particules d'oxyde de cérium, un groupe de fines particules de zircone et d'un groupe de particule d'oxyde de nickel ;

dans lequel le groupe de grosses particules d'oxyde de cérium est un groupe de particules d'oxyde de cérium dopées avec au moins un élément sélectionné parmi de l'yttrium, du samarium, du gadolinium ; le groupe de fines particules de zircone est un groupe de particules de zircone stabilisée par de l'oxyde d'yttrium et/ou de l'oxyde de scandium ; et

les tailles de particule moyennes des groupes de particules respectifs répondent à la relation suivante : le groupe de grosses particules d'oxyde de cérium > le groupe de particules d'oxyde de nickel > le groupe de fines particules de zircone.

2. Le matériau d'électrode à combustible pour piles à combustible à oxyde solide selon la revendication 1, dans lequel la taille de particule moyenne du groupe de particules d'oxyde de cérium est de 2 à 50 $\mu$m, la taille de particule moyenne du groupe de particules d'oxyde de nickel est de 0,5 à 5 $\mu$m, et la taille de particule moyenne du groupe de particules de zircone est de 0,1 à 1 $\mu$m.

3. Le matériau d'électrode à combustible pour piles à combustible à oxyde solide selon la revendication 1 ou 2, dans lequel les teneurs des groupes de particules respectifs sont de 20 à 50% en masse pour le groupe de particules d'oxyde de cérium, de 40 à 70% en masse pour le groupe de particules d'oxyde de nickel, de 5 à 25% en masse pour le groupe de particules de zircone, et une teneur totale du groupe de particules d'oxyde de cérium et du groupe de particules de zircone est de 30 à 60% en masse.

**4.** Le matériau d'électrode à combustible pour piles à combustible à oxyde solide selon l'une quelconque des revendications de 1 à 3, dans lequel les teneurs des groupes de particules respectifs sont de 25 à 45% en masse pour le groupe de particules d'oxyde de cérium, de 45 à 65% en masse pour le groupe de particules d'oxyde de nickel, et de 5 à 20% en masse pour le groupe de particules de zircone.

**5.** Le matériau d'électrode à combustible pour piles à combustible à oxyde solide selon l'une quelconque des revendications de 1 à 4, dans lequel la particule de zircone est de la zircone partiellement stabilisée contenant principalement un système quadratique stabilisé à l'aide de 3 à 6% par mole d'oxyde d'yttrium dans le cas de la zircone stabilisée à l'oxyde d'yttrium, et stabilisée à l'aide de 3 à 7% par mole d'oxyde de scandium dans le cas de la zircone stabilisée à l'oxyde de scandium.

**6.** Une électrode à combustible pour pile à combustible à oxyde solide formée sur une face d'un électrolyte solide dans une pile à combustible à oxyde solide, dans laquelle l'électrode à combustible est constituée d'un matériau d'électrode à combustible selon l'une quelconque des revendications 1 à 5.

**7.** Une pile à combustible à oxyde solide comprenant une électrode à combustible formée sur une face d'un électrolyte solide et une électrode à air formée sur l'autre face, dans laquelle l'électrode à combustible est constituée du matériau d'électrode à combustible selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI349156 B
- JP HEI5174833 B
- JP HEI4121964 B
- JP HEI76768 B
- JP HEI4192261 B
- JP HEI8306361 B
- JP HEI992294 B
- JP 2001102060 A
- EP 0955685 A1